# EUROPÄISCHE PATENTSCHRIFT

(11) **EP 2 019 225 B1**
(45) Veröffentlichungstag und Bekanntmachung des Hinweises auf die Patenterteilung: **01.09.2010**
(21) Anmeldenummer: 08018355.1
(22) Anmeldetag: 05.05.2004
(51) Int. Cl.: F16D 13/74, F16D 21/06

(54) **Doppelkupplungsgetriebe**
Double clutch gearbox
Boîte de vitesses d'embrayage double

(30) Priorität: 30.05.2003 DE 10324467
(43) Veröffentlichungstag der Anmeldung: 28.01.2009
(62) Teilanmeldung aus: 04731159.2
(73) Patentinhaber: Volkswagen Aktiengesellschaft, 38436 Wolfsburg (DE)
(72) Erfinder: Engelen, Helmut, 38547 Calberlah (DE); Denecke, Roland, 38381 Jerxheim (DE); Elfrath, Thomas Dr., 38518 Gifhorn (DE)
(74) Vertreter: Brune, Axel

(56) Entgegenhaltungen:
- EP-A- 0 399 764
- EP-A- 0 578 435
- WO-A-02/070913
- DE-A- 10 310 831
- GB-A- 1 101 471
- ANONYMOUS: "Exxon Gear Oil GX 80W-90, W-140" INTERNET ARTICLE, [Online] 2001, XP002308206 Gefunden im Internet: URL:http://www.exxon.com/USA-English/Lubes /PDS/Pds_Files/nause2cvlexexxongearoilgx80 w-90_85w-140.pdf> [gefunden am 2004-11-30]

## Beschreibung

Die vorliegende Erfindung betrifft ein Drehmomentübertragungssystem umfassend einen Schmierstoff, ein Doppelkupplungsgetriebe, umfassend zwei im Schmierstoff nasslaufende Kupplungen und zwei Getriebeeingangswellen, denen jeweils eine separate Reibkupplung und eine Gruppe von Gangstufen zugeordnet ist gemäß dem Oberbegriff des Anspruchs 1.

Ein Doppelkupplungsgetriebe ist eine neue Getriebeart mit zwei in der Regel koaxial angeordneten Getriebeeingangswellen, denen jeweils eine separate Reibkupplung und eine Gruppe von Gangstufen zugeordnet ist. Ein wesentlicher Vorteil des Doppelkupplungsgetriebes gegenüber einem konventionellen Stufenwechselgetriebe liegt in den weitgehend zugkraftunterbrechungsfreien Schaltvorgängen, durch die man ein besseres Beschleunigungsvermögen im Zugbetrieb und ein besseres Verzögerungsvermögen im Schubbetrieb erreicht. Ein Vorteil gegenüber einem Handschaltgetriebe liegt in dem geringeren Verbrauch. Wegen der.fehlenden Zugkraftunterbrechung ist es dem automatisierten Handschaltgetriebe überlegen, bietet aber dem Nutzer ähnliche Möglichkeiten wie ein automatisiertes Getriebe. Die DE 101 34 118 A1 beschreibt ein Doppelkupplungsgetriebe mit einer trockenen Kupplung. Es sind auch bereits Doppelkupplungsgetriebe mit nassen Kupplungen bekannt, die zwei in Öl laufende Lamellenkupplungen verwenden.

Problematisch bei den bisher bekannten Doppelkupplungsgetrieben mit nasslaufenden Kupplungen ist die Tatsache, dass erhöhte Anforderungen an die verwendeten Schmierstoffe bestehen, die von den üblicherweise verwendeten Ölen für Handschaltgetriebe nicht erfüllt werden. Die Schmierstoffanforderungen liegen auch deutlich über denjenigen für die üblichen Stufenautomatikgetriebe. Das Doppelkupplungsgetriebe fordert insbesondere einen sehr weichen positiven Reibwertverlauf bei Gleitgeschwindigkeiten von beispielsweise zwischen 0 und ca. 0,5 m/s, wodurch ein ausreichendes Antishudderverhalten gesichert wird. Der positive Reibwertverlauf sollte über die Lebensdauer des Getriebes bestehen bleiben. Dabei ist zu berücksichtigen, dass in dem Getriebe erhebliche Temperaturdifferenzen auftreten können, die im Bereich der Kupplung beispielsweise zwischen etwa -40° C und bis zu 180° C betragen können, In sogenannten hot-spots in den Lamellenpaketen können auch Temperaturen von beispielsweise über 200° C auftreten.

Um die Verschleißfestigkeit der beanspruchten Bauteile des Doppelkupplungsgetriebes zu erhöhen waren bislang aufwendige Beschichtungsverfahren notwendig oder es mussten besonders harte Werkstoffe eingesetzt werden Beispielsweise wurden dazu die Verzahnungen phosphatiert oder anders oberflächenbeschichtet, die Schaltgabeln mit Messing durch Flammspritzen beschichtet und/oder die Synchronringe erhielten eine Molybdänbeschichtung. Bislang waren also recht aufwendige Maßnahmen bei einem solchen Doppelkupplungsgetriebe notwendig, um unter anderem auch das sogenannte "stick/slip"-Phänomen zu vermeiden. Dabei kommt es zu unerwünschten Schwingungen, die Geräusche verursachen. Im Bereich der Kupplungen verwendete man bei den bisherigen Doppelkupplungsgetrieben beispielsweise Papierlamellen, mit denen man jedoch nur eine vergleichsweise geringe Belastbarkeit mit einer Hertzschen Pressung im Bereich von beispielsweise ca. 1 bis 1,5 N/mm² erreichen kann. Darüber hinaus ist zu beachten, dass bei einem Doppelkupplungsgetriebe wegen der erhöhten Anforderungen an den Schmierstoff in der Regel die Verwendung besonderer Getriebeöle erforderlich ist. Aufgrund der Kombination eines Handschaltgetriebes mit einem Automatikgetriebe wird einerseits die Fresstragfähigkeit, Pittingverhalten und Synchronverhalten des Handschaltgetriebes gefordert und andererseits bestehen spezielle Anforderungen für die Lamellenkupplung, die im Mikroschlüpfberelch außerdem geregelt werden muss.

Die Verwendung von Werkstoffen, die Kohlenstofffasern enthalten, bei Reibscheiben ist grundsätzlich aus der DE 101 18 920 C1 bekannt. Die dort beschriebenen Reibscheiben bestehen aus mit Kohlenstofffasern verstärkten Keramik-Verbundwerkstoffen und werden in erster Linie als Bremsscheiben eingesetzt. Es wird auch die Eignung derartiger Reibbeläge für Kupplungsscheiben beschrieben. Dabei handelt es sich aber um sogenannte trockene Kupplungen und die in der genannten Schrift erwähnten Materialien kommen für nasslaufende, mit Öl betriebene Kupplungen nicht in Betracht. Die Druckschrift hat zudem keinen Bezug zu Kupplungen in Doppelkupplungsgetrieben, bei denen die zuvor erwähnten spezifischen Anforderungen bestehen. Ähnliche Werkstoffe aus einer Verbundkeramik mit kohlenstoffhaltigen Fasern, die mit einer die Elemente Si und C enthaltenden Matrix reaktionsgebunden sind, werden in der DE 101 31 758 beschrieben. Soweit in dieser Druckschrift die Verwendung für Kupplungsscheiben erwähnt wird, handelt es sich ebenfalls um trockene Reibkupplungen.

Ein Drehmomentübertragungssystem, umfassend einen Schmierstoff, ein Kupplungsgetriebe, umfassend zwei im Schmierstoff nasslaufende Kupplungen, wobei mindestens eine der Kupplungen und/oder das Getriebe mindestens ein auf Verschleiß beanspruchtes Bauteil umfasst, welches mindestens teilweise zumindest im Oberflächenbereich aus einem kohlenstoffhaltigen Werkstoff besteht, ist bereits aus der WO 02/070913 A1 bekannt geworden. Es handelt sich hierbei jedoch nicht um ein Doppelkupplungsgetriebe im eigentlichen Sinne, da hier nur eine Eingangswelle und eine Ausgangswelle vorgesehen ist.

Ein Drehmomentübertragungssystem umfassend einen Schmierstoff, ein Doppelkupplungsgetriebe, umfassend zwei im Schmierstoff nasslaufende Kupplungen und zwei Getriebeeingangswellen, denen jeweils eine separate Reibkupplung und eine Gruppe von Gangstufen zugeordnet ist, ist beispielsweise aus der US 6,499,578 B1 bekannt geworden. Hier werden grundsätzlich Maßnahmen zur Kühlung von nasslaufenden Kupplungen mittel Kühlöl vorgeschlagen. Andererseits wird auch darauf hingewiesen, dass die Wärmekapazität der die Reibbeläge tragenden Reibbelagtragelemente ebenfalls als Wärmespeicher verfügbar gemacht werden könne, wenn man anstelle von Belagmaterialien mit geringer Leitfähigkeit Belagmaterialien mit hoher Leitfähigkeit verwendet. In Betracht kommt hier die Verwendung von Reibbelägen aus Sintermaterial, das eine vergleichsweise hohe Wärmeleitfähigkeit hat. Problematisch an der Verwendung von Sinterbelägen ist allerdings, dass Sinterbeläge einen degressiven Verlauf des Reibwertes über einer Schlupfdrehzahl (Relativdrehzahl ΔN zwischen den reibenden Oberflächen) aufweisen, also dass dµ/d ΔN < 0 gilt. Ein degressiver Verlauf des Reibwerts ist Insoweit nachteilig, als dieser eine Selbsterregung von Schwingungen im Antriebsstrang fördern kann bzw. derartige Schwingungen zumindest nicht dämpfen kann. Es ist deshalb vorteilhaft, wenn in einem Lamellenpaket sowohl Lamellen mit Reibbelägen aus Sintermaterial als auch Lamellen mit Reibbelägen aus einem anderen Material mit progressivem Reibwertverlauf über der Schlupfdrehzahl (dµ/d ΔN > 0) vorgesehen sind, so dass sich für das Lamellenpaket insgesamt ein progressiver Reibwertverlauf über der Schlupfdrehzahl oder zumindest näherungsweise ein neutraler Reibwertverlauf über der Schlupfdrehzahl (dµ/d ΔN = 0) ergibt und dementsprechend eine Selbsterregung von Schwingungen im Antriebsstrang zumindest nicht gefördert wird oder - vorzugsweise - Drehschwingungen im Antriebsstrang sogar (aufgrund eines nennenswert progressiven Reibwertverlaufs über der Schlupfdrehzahl) gedämpft werden. Auch hier kommen letztendlich verschiedene Anforderungen an die Kupplungsbeläge zum Tragen - die Wärmeabfuhr seinerseits, als auch der Anspruch an den Reibwertverlauf andererseits, wobei ebenfalls berücksichtigt werden muss, dass es sich um eine nasslaufende Kupplung handelt.

Eine Auswahl von Schmierstoffen in Drehmomentübertragungssystemen ist beispielsweise in den Druckschriften EP 0 578 435 A1 und EP 0 399 764 gegeben. In der EP 0 578 435 A1 ist beispielsweise offenbart, dass große Fahrzeuge, die mit manuellen, synchronisierten Übersetzungen ausgestattet sind, mit herkömmlichen, auf Mineralöl basierenden Übersetzungsschmiermitteln betrieben werden, wobei derartige Schmiermittel Zusätze zum Schutz vor Abrieb, zum Schutz vor Korrosion und für andere nützliche Eigenschaftsverbesserungen enthalten. Die Menge und der Typ des verwendeten Zusatzes hängen von den Anforderungen an das Verhalten des Öls ab. einschließlich der Eigenschaften bei geringer Temperatur oder dem Schutz vor Abrieb. Ferner offenbart die EP 0 578 435 A1, dass bei extremeren Temperaturen und anderen extremen Bedingungen, denen viele moderne Kraftfahrzeuge ausgesetzt sind, es von Vorteil sein kann, wenn andere als die bekannten Mineralöle zur Formulierung der Übertragungsfluide verwendet werden Auch führt die EP 0 578 435 A1 aus, dass im Gegensatz zu auf Mineralöl basierenden Übertragungsfluiden, viele der synthetischen Fluide, die auf im wesentlichen aschefreien P/S-Zusatzsystemen basieren, unglücklicherweise in den auf Synchronisierung basierenden Übertragungen unvorteilhaft schlechte Reibungseigenschaften aufweisen und eine schlechte Synchronisierung der Gangwechsel bewirken. Ferner beschreibt die EP 0 578 435 A1, dass zur Lösung dieses Problems es gewöhnlich erforderlich ist, eine zweckmäßige Verbesserung der Reibungseigenschaften der fertigen, auf synthetischem Öl basierenden Schmiermittel zu bewirken.

Die EP 0 399 764 betrifft Schmiermittel für Sperrdifferenzialgetriebe, insbesondere Lamellensperrdifferenziale. Von der Bauart handelt es sich um drehmomentfühlende Differentiale ihre Sperrwirkung kann in einem weiten Bereich eingestellt werden und es ist möglich, für Zugbetrieb (wenn der Verbrennungsmotor antreib) und Schubbetrieb (wenn der Verbrennungsmotor geschleppt wird) große Unterschiede in der Sperrwirkung einzustellen. Dafür sind diese Sperrdifferenziale mechanisch sehr aufwendig gebaut und entsprechend teuer. Zur Kernfunktion gehört es, dass die Ausgleichsbewegung zwischen den Seitenrädern und dem Gehäuse gebremst wird. Dazu besitzt dieser Sperrentyp Lamellen, die zwischen den seitlichen Kegelrädern und dem Gehäuse wirken, und die eine Relativbewegung abhängig vom Drehmoment verhindern sollen. Die EP 0 399 764 schlägt in diesem Rahmen ein Schmiermittel für Sperrdifferenzialgetriebe vor, welches die Geräuschentwicklung beim Durchrutschen der Lamellen vermindert, aber gleichermaßen nicht die Leistung des Differentials beeinträchtigt.

Die Aufgabe der vorliegenden Erfindung.besteht darin, ein Drehmomentübertragungssystem der eingangs genannten Glättung zur Verfügung zu stellen, bei dem die Kupplungen sowie gegebenenfalls weitere Getriebebauteile den vorgenannten komplexen Anforderungen gerecht werden. Insbesondere soll ein vorteilhafter Schmierstoff für ein Doppelkupplungsgetriebe, umfassend zwei nasslaufende Kupplungen und zwei Getriebeeingangswellen, denen jeweils eine separate Reibkupplung und eine Gruppe von Gangstufen zugeordnet ist, vorgeschlagen werden.

Die Lösung dieser Aufgabe liefert ein erfindungsgemäßes Drehmomentübertragungssystem der eingangs genannten Art mit den kennzeichnenden Merkmalen des Anspruchs 1. Erfindungsgemäß ist vorgesehen, dass mindestens eine der Kopplungen und/oder das Getriebe mindestens ein auf Verschleiß beanspruchtes Bauteil umfasst, welches mindestens teilweise zumindest im Oberflächenbereich aus einem kohlenstoffhaltigen Werkstoff besteht, wobei es sich bei dem Schmierstoff um ein vollsynthetisches ATF-Öl (automatic transmission fluid) handelt, wobei das als Schmierstoff verwendete ATF- Öl einen Friction Modifier enthält, derart, dass es als Handschaltgetriebeöl im Bereich der Gleitgeschwindigkeit von 0-100 mm/s einen durchgehend positiven Reibwertverlauf gestaltet. Die genannten carbonfaserhaltigen Werkstoffe haben zum Einen den Vorteil der hohen thermischen Stabilität. Außerdem ist die spezifische Belastbarkeit von carbonfaserhaltigen Werkstoffe im Bereich von Kupplungslamellen höher als bei den bisherigen Papierbelägen. Dies eröffnet die Möglichkeit, gegebenenfalls die Anzahl der in einer Kupplung verwendeten Reibbeläge zu reduzieren. Dadurch ist wiederum eine Reduzierung der Baugröße des Doppelkupplungsgetriebes möglich. Mit den genannten carbonfaserhaltigen Belägen kann ein weicher positiver Reibwertverlauf insbesondere bei geringen Gleitgeschwindigkeiten erzielt werden, wodurch ein ausreichendes Antishudderverhalten gesichert wird.

Wegen der hohen chemischen stabilität der Carbon-Werkstoffe hat man die Möglichkeit, die Fresstragfähigkeit und das Pittingverhalten im mechanischen Teil des Doppelkupplungsgetriebes über das Getriebeöl zu erhöhen. Dadurch kann man auf die bislang verwendeten aufwendigen Oberflächenbeschichtungen wie Phosphatierung, Messing- oder Molybdänbeschichtung oder spezifische Werkstoffe verzichten.

Gemäß einer bevorzugten Weiterbildung der Erfindung kann man nicht nur die Oberfläche der Kupplungslamellen, sondern beispielsweise auch Synchronringe und/oder Schaltpatten der Schaltgabeln mindestens teilweise aus einem carbonfaserhaltigen Werkstoff ausführen. Im Bereich der Kupplungsbeläge können derartige Werkstoffe eine Belastbarkeit mit einer Hertzschen Pressung von mehr als 2 N/mm² vorzugsweise mehr als 5 N/mm², weiter vorzugsweise mindestens etwa 10 N/mm² bis zu etwa 15 N/mm² zulassen. Die Anzahl der pro Kupplung verwendeten Lamellen lässt sich reduzieren, beispielsweise auf weniger als zehn Lamellen pro Kupplung. Der erfingdungsgemäß verwendete kohlenstoffhaltige Werkstoff umfasst vorzugsweise mindestens teilweise ein aus Fasern gewebtes Material. Alternativ dazu oder gleichzeitig kommen beispielsweise Kohlenstofffaserhaltige Werkstoffe in Betracht, die mindestens ein Granulat umfassen, welches mit einem Bindemittel gebunden sein kann.

Für ein erfindungsgemäßes Drehmomentübertragungssystem mit einem Doppelkupplungsgetriebe (Direkt-Schalt-Getriebe) werden Schmierstoffe benötigt, die in ihrer Charakteristik ATF-Ölen ähnlich sind. Die erfindungsgemäß verwendeten ATF-Öle (automatic transmission fluid) sind vorzugsweise vollsynthetische Öle, die zur Gestaltung des Reibwerts der Kupplung, insbesondere zur Erzielung eines positiven Reibwertverlaufs entsprechende Additive, insbesondere "friction modifier" enthalten. Für die bisher bekannten Doppelkupplungsgetriebe waren die üblichen Handschaltgetriebeöle in der Regel nicht geeignet.

Für sogenannte Hypoidgetriebe, das heißt Kegelradachsgetriebe mit versetzen Achsen, die man beispielsweise in der Hinterachsenkupplung von Fahrzeugen einsetzt, werden spezielle. Getriebeöle eingesetzt. Es handelt sich um besonders hochlegierte Hypoidöle, die man benötigt, da beim Abwälzen stärkere Gleitbewegungen zwischen den sich berührenden Zahnflanken auftreten. Es ist jedoch schwierig, mit solchen Hypoidölen einen positiven Reibwertverlauf zu erzielen, wie man ihn bei einem Doppelkupplungsgetriebe der erfindungsgemäßen Art benötigt. Weshalb kommen die bekannten Hypoidöle als Schmierstoffe für ein Doppelkupplungsgetriebe ebenfalls nicht in Frage.

Erfindungsgemäß kommen jedoch Handschaltgetriebeöle mit verbessertem Reibwertverhalten aufgrund der verwendeten kohlenstoffhaltigen Werkstoffe insbesondere im Bereich der Kupplungslamellen in Betracht. Es sollte vorzugsweise ein Handschaltgetriebeöl oder ein diesem ähnlicher Schmierstoff verwendet werden, dessen Eigenschaften mindestens der Leistungsklasse GL4 des API (American Petroleum Institut) entsprechen. Vorzugsweise sollte das Getriebeöl mindestens der Leistungsklasse GL5 des API entsprechen. Das Getriebeöl enthält weiterhin vorzugsweise Additive, die die Fresstragfähigkeit und/oder das Pittingverhalten verbessern, wodurch man den Vorteil hat, dass man auf spezifische Oberflächenbeschichtungen oder besondere Werkstoffe bei den im Getriebe oder in der Kupplung verwendeten Bauteilen verzichten kann. Das Getriebeöl sollte weiterhin vorzugsweise eine entsprechende thermische Stabilität aufweisen und kann dazu insbesondere mit entsprechenden Additiven versehen sein. Dadurch wird eine ausreichend Viskosität über den gesamten Temperaturbereich von vorzugsweise zwischen etwa -40° C und etwa 180° C bis 200° C gewährleistet. Gemäß einer bevorzugten Weiterbildung der Erfindung enthält das Getriebeöl weiterhin wenigstens ein Additiv zur Verbesserung des Viskositätsverhaltens und/oder Temperaturverhaltens und/oder Verschleißschutzverhaltens und/oder oxidationsschutzverhaltens und/oder Schaumverhaltens und/oder Korrosionsschutzverhaltens und/oder Reibwertverhalten.

Die in den Unteransprüchen genannten Merkmale betreffen bevorzugte Weiterbildungen der erfindungsgemäßen Aufgabenlösung. Weitere Vorteile der Erfindung ergeben sich aus des nachfolgenden Detallbeschreibung.

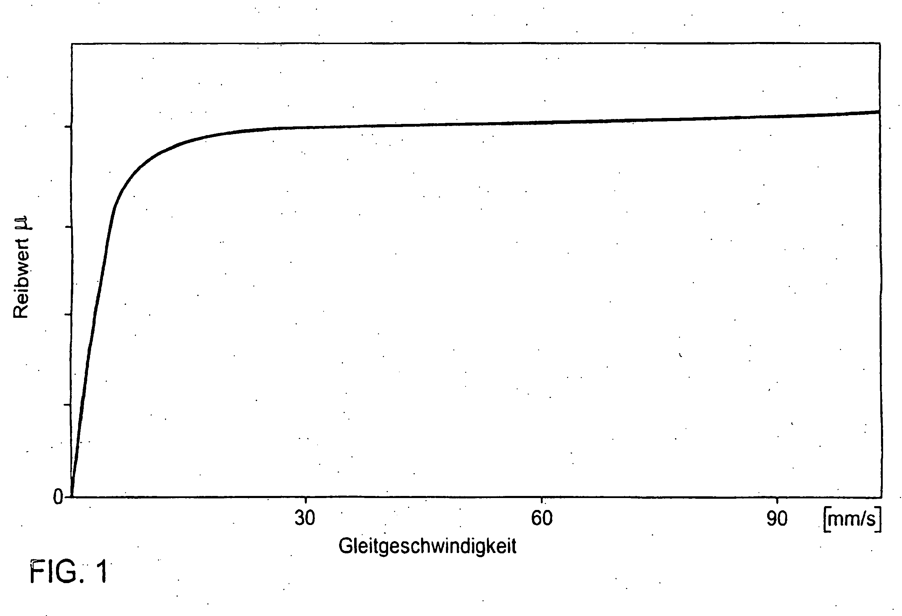

Nachfolgend wird auf Fig. 1 Bezug genommen. Die Darstellung zeigt in einem beispielhaften Diagramm einen Reibwertverlauf, wie er bei einem erfindungsgemäßen Doppelkupplungsgetriebe angestrebt wird.

Dabei ist in Fig. 1 der Reibwert µ über die Gleitgeschwindigkeit [mm/s] aufgetragen. Wie man sieht, liegt ein durchgehend positiver Reibwertverlauf vor, wobei in dem Diagramm beispielhaft Gleitgeschwindigkeiten im Bereich bis zu 100 mm/s. das heißt ca. 0,1 m/s wiedergegeben sind. Mit zunehmender Gleitgeschwindigkeit steigt der Reibwert in dem dargestellten Geschwindigkeitsbereich allmählich und nur geringfügig an. Es ist kein Maximum in der Kurve des Reibwertverlaufs vorhanden. Somit ist ein weicher positiver Reibwertverlauf gegeben.

## Patentansprüche

1. Drehmomentübertragungssystem, umfassend:
- einen Schmierstoff,
- ein Doppelkupplungsgetriebe, umfassend zwei im Schmierstoff nasslaufende Kupplungen und zwei Getriebeeingangswellen, denen jeweils eine separate Reibkupplung und eine Gruppe von Gangstufen zugeordnet ist,
**dadurch gekennzeichnet, dass**
- mindestens eine der Kupplungen und/oder das Getriebe mindestens ein auf Verschleiß beanspruchtes Bauteil umfasst, welches mindestens teilweise zumindest im Oberflächenbereich aus einem kohlenstoffhaltigen Werkstoff besteht, wobei
- es sich bei dem Schmierstoff um ein vollsynthetisches ATF-Öl (automatic transmission fluid) handelt, wobei das als Schmierstoff verwendete ATF - Öl einen Friction Modifier enthält, derart, dass es als Handschaltgetriebeöl im Bereich der Gleitgeschwindigkeit von 0-100 mm/s einen durchgehend positiven Reibwertverlauf gestaltet.

2. Drehmomentübertragungssystem nach Anspruch 1, **dadurch gekennzeichnet, dass** die Reibkupplung mit Kupplungslamellen ausgestattet ist, wobei mindestens die Oberfläche der Kupplungslamellen mindestens teilweise aus einem Werkstoff besteht, der Carbonfasern umfasst.

3. Drehmomentübertragungssystem nach Anspruch 1 oder 2, **dadurch gekennzeichnet, dass** das Doppelkupplungsgetriebe Synchronringe und/oder Schaltpatten der Schaltgabeln aufweist, wobei die Synchronringe und/oder Schaltpatten der Schaltgabeln mindestens im Bereich ihrer Oberfläche mindestens teilweise einen carbonfaserhaltigen Werkstoff umfassen.

4. Drehmomentübertragungssystem nach einem der Ansprüche 1 bis 3, **dadurch gekennzeichnet, dass** einen carbonfaserhaltigen Werkstoff umfassende Kupplungsbeläge vorgesehen sind, die eine Belastbarkeit mit einer Hertzschen Pressung von mehr als 2 N/mm², vorzugsweise mehr als 5 N/mm², weiter vorzugsweise mindestens etwa 10 N/mm² bis etwa 15 N/mm² zulassen.

5. Drehmomentübertragungssystem nach einem der Ansprüche 1 bis 4, **dadurch gekennzeichnet, dass** mindestens eine Kupplung weniger als zehn Lamellen umfasst.

6. Drehmomentübertragungssystem nach einem der Ansprüche 1 bis 5, **dadurch gekennzeichnet, dass** wenigstens ein kohlenstofffaserhaltiger Werkstoff vorgesehen ist, der mindestens teilweise ein aus Fasern gewebtes Material umfasst.

7. Drehmomentübertragungssystem nach einem der Ansprüche 1 bis 6. **dadurch gekennzeichnet, dass** wenigstens ein kohlenstofffaserhaltiger Werkstoff vorgesehen ist, der mindestens teilweise ein Granulat, gegebenenfalls mit einem Bindemittel gebunden, umfasst.

8. Drehmomentübertragungssystem nach einem der vorhergehenden Ansprüche, **dadurch gekennzeichnet, dass** das Getriebeöl Additive enthält, die das Lasttragevermögen verbessern.

9. Drehmomentübertragungssystem nach einem der vorhergehenden Ansprüche, **dadurch gekennzeichnet, dass** das Getriebeöl Additive zur Erzielung einer höheren thermischen Stabilität umfasst.

10. Drehmomentübertragungssystem nach seinem der vorhergehenden Ansprüche, **dadurch gekennzeichnet, dass** das Getriebeöl wenigstens ein Additiv zur Verbesserung des Viskositätsverhaltens und/oder Temperaturverhaltens und/oder Verschleißschutzverhaltens, und/oder Oxidationsschutzverhaltens, und/oder Schaum-Verhaltens und/oder Korrosionsschutzverhaltens und/oder Reibwertverhaltens umfasst.

11. Kraftfahrzeug, **dadurch gekennzeichnet, dass** dieses ein Drehmomentübertragungssystem mit den Merkmalen eines der Ansprüche 1 bis 10 umfasst.

## Claims

1. Torque transfer system, comprising:
- a lubricant,
- a double clutch transmission comprising two clutches which run wet in the lubricant and two transmission input shafts which are assigned in each case a separate friction clutch and a group of gear stages, **characterized in that**
- at least one of the clutches and/or the transmission comprises at least one component which is subjected to wearing stress and which consists at least partially, at least in the surface region, of a carbon-containing material,
- with the lubricant being a fully synthetic ATF oil (automatic transmission fluid), with the ATF oil which is used as lubricant containing a friction modifier such that said ATF oil, as a manual transmission oil, has a continuously positive friction coefficient profile in the range of sliding speeds of 0-100 mm/s.

2. Torque transfer system according to Claim 1, **characterized in that** the friction clutch is equipped with clutch lamellae, wherein at least the surface of the clutch lamellae consists at least partially of a material which comprises carbon fibers.

3. Torque transfer system according to Claim 1 or 2, **characterized in that** the double clutch transmission has synchronizing rings and/or shift tabs of the shift forks, wherein the synchronizing rings and/or shift tabs of the shift forks at least partially comprise, at least in the region of their surface, a material containing carbon fibers.

4. Torque transfer system according to one of Claims 1 to 3, **characterized in that** clutch linings comprising a material containing carbon fibers are provided, which allow a load-bearing capacity with a Hertzian pressure of more than 2 N/mm², preferably of more than 5 N/mm², further preferably of at least about 10 N/mm² to about 15 N/mm².

5. Torque transfer system according to one of Claims 1 to 4, **characterized in that** at least one clutch comprises less than ten lamellae.

6. Torque transfer system according to one of Claims 1 to 5, **characterized in that** at least one material containing carbon fibers is provided, which comprises at least partially a material woven from fibers.

7. Torque transfer system according to one of Claims 1 to 6, **characterized in that** at least one material containing carbon fibers is provided, which comprises at least partially a granulate, if appropriate bound by means of a binder.

8. Torque transfer system according to one of the preceding claims, **characterized in that** the transmission oil contains additives which improve the load-bearing capacity.

9. Torque transfer system according to one of the preceding claims, **characterized in that** transmission oil comprises additives for achieving a higher thermal stability.

10. Torque transfer system according to one of the preceding claims, **characterized in that** the transmission oil comprises at least one additive for improving the viscosity behavior and/or temperature behavior and/or wear protection behavior and/or oxidation protection behavior and/or foam behavior and/or corrosion protection behavior and/or friction coefficient behavior.

11. Motor vehicle, **characterized in that** this comprises a torque transfer system having the features of one of Claims 1 to 10.

## Revendications

1. Système de transfert de couple, comprenant :
- un lubrifiant,
- une boîte de vitesses à double embrayage, comprenant deux embrayages humides immergés dans le lubrifiant, et deux arbres d'entrée de boîte de vitesses, auxquels sont associés à chaque fois un embrayage à friction séparé et un groupe de rapports de vitesses,
**caractérisé en ce que**
- au moins l'un des embrayages et/ou la boîte de vitesses comprend au moins un composant sollicité en usure, qui se compose au moins en partie et au moins dans la région de la surface d'un matériau contenant du carbone,
- le lubrifiant étant une huile de type fluide de transmission automatique (ATF) entièrement synthétique, l'huile ATF utilisée comme lubrifiant contenant un modificateur de friction de telle sorte qu'elle permette une courbe de coefficient de friction continue positive en tant qu'huile de boîte de vitesses à changement de vitesses manuel dans la plage de vitesse de glissement de 0 à 100 mm/s.

2. Système de transfert de couple selon la revendication 1, **caractérisé en ce que** l'embrayage à friction est muni de disques d'embrayage, au moins la surface des disques d'embrayage se composant au moins en partie d'un matériau qui comprend des fibres de carbone.

3. Système de transfert de couple selon la revendication 1 ou 2, **caractérisé en ce que** la boîte de vitesses à double embrayage présente des bagues synchrones et/ou des pattes de changement de vitesse des fourchettes de sélection, les bagues synchrones et/ou les pattes de changement de vitesse des fourchettes de sélection comprenant, au moins dans la région de leur surface, au moins en partie un matériau contenant des fibres de carbone.

4. Système de transfert de couple selon l'une quelconque des revendications 1 à 3, **caractérisé en ce que** des garnitures d'embrayage comprenant un matériau contenant des fibres de carbone sont prévues, lesquelles autorisent une charge avec une pression hertzienne de plus de 2 N/mm², de préférence de plus de 5 N/mm², et encore plus préférablement d'au moins environ 10 N/mm² à environ 15 N/mm².

5. Système de transfert de couple selon l'une quelconque des revendications 1 à 4, **caractérisé en ce qu'**au moins un embrayage comprend moins de dix disques.

6. Système de transfert de couple selon l'une quelconque des revendications 1 à 5, **caractérisé en ce qu'**au moins un matériau contenant des fibres de carbone est prévu, lequel comprend au moins en partie un matériau tissé en fibres.

7. Système de transfert de couple selon l'une quelconque des revendications 1 à 6, **caractérisé en ce qu'**au moins un matériau contenant des fibres de carbone est prévu, lequel comprend au moins un granulat, éventuellement lié avec un liant.

8. Système de transfert de couple selon l'une quelconque des revendications précédentes, **caractérisé en ce que** l'huile de boîte de vitesses contient des additifs qui améliorent la capacité de support de charges.

9. Système de transfert de couple selon l'une quelconque des revendications précédentes, **caractérisé en ce que** l'huile de boîte de vitesses comprend des additifs pour obtenir une meilleure stabilité thermique.

10. Système de transfert de couple selon l'une quelconque des revendications précédentes, **caractérisé en ce que** l'huile de boîte de vitesses comprend au moins un additif pour améliorer la viscosité et/ou le comportement à la température et/ou la protection contre l'usure et/ou la protection contre l'oxydation et/ou le comportement de moussage et/ou la protection contre la corrosion et/ou le coefficient de friction.

11. Véhicule automobile, **caractérisé en ce qu'**il comprend un système de transfert de couple ayant les caractéristiques de l'une quelconque des revendications 1 à 10.
